# EUROPÄISCHE PATENTANMELDUNG

(11) **EP 2 746 026 A2**
(43) Veröffentlichungstag der Anmeldung: **25.06.2014**
(21) Anmeldenummer: 13197868.6
(22) Anmeldetag: 17.12.2013
(51) Int. Cl.: B29C 45/06, B29C 45/27, B29K 105/00

(54) **Vorrichtung und Verfahren zum Herstellen von Kunststoffvorformlingen aus einem thermoplastischen Kunststoff**

(30) Priorität: 18.12.2012 DE 102012112491
(71) Anmelder: Krones AG, 93073 Neutraubling (DE)
(72) Erfinder: Forsthövel, Jochen, 93073 Neutraubling (DE); Senn, Konrad, 93073 Neutraubling (DE)
(74) Vertreter: Bittner, Bernhard

(57) **Zusammenfassung**

Die Erfindung betrifft eine Vorrichtung zum Herstellen von Kunststoffvorformlingen aus einem thermoplastischen Kunststoff (12) mit einer Einrichtung (1) zum Bereitstellen von fließfähigem thermoplastischem Kunststoff (12), einem der Einrichtung (1) nachgeschalteten Heißkanalwerkzeug (2) und einer mehrere Kavitäten (3) aufweisende Transporteinrichtung (4), wobei das Heißkanalwerkzeug (2) wenigstens einen Heißkanal (5) aufweist, der in eine Fläche (6) des Heißkanalwerkzeugs (2) eingebracht ist, und die Transporteinrichtung (4) eine Fläche (7) aufweist, in welcher Öffnungen (8) zum Befüllen der Kavitäten (3) eingebracht sind, wobei die Flächen (6, 7) des Heißkanalwerkzeugs (2) und der Transporteinrichtung (4) derart gegeneinander ausrichtbar sind, dass sie aneinander gleiten, wobei immer wenigstens eine Öffnung (8) einer Kavität (3) über dem Heißkanal (5) positioniert ist.

## Beschreibung

Die Erfindung betrifft eine Vorrichtung zum Herstellen von Kunststoffvorformlingen aus einem thermoplastischen Kunststoff nach dem Oberbegriff des Patentanspruchs 1. Ferner betrifft die Erfindung ein Verfahren zum Herstellen von Kunststoffvorformlingen aus einem thermoplastischen Kunststoff.

Aus dem Stand der Technik sind verschiedene Vorrichtungen und Verfahren zur Herstellung von Kunststoffvorformlingen aus thermoplastischen Kunststoffen bekannt. Zum einen existiert das Spritzgussverfahren, bei dem das Kunststoffgranulat nach einer Trocknung mit trockener Luft, die einen Taupunkt zwischen ca. 243 K und ca. 233 K aufweist, bei einer Temperatur zwischen ca. 513 K und ca. 573 K in einer Spritzeinheit aufgeschmolzen und unter Druck in die jeweilige Kavität für die Kunststoffvorformlinge eingebracht wird. Die Vorrichtungen beziehungsweise Werkzeuge zur Herstellung von solchen Kunststoffvorformlingen sind in der Regel mit Heißkanalwerkzeugen versehen, wobei der aufgeschmolzene Kunststoff über einen Heißkanalverteiler auf einzelne Kavitäten zur Herstellung mehrerer Kunststoffvorformlinge während eines Formtaktes verteilt wird.

Übliche Kavitätenzahlen liegen dabei im Bereich von 72 bis 96. Dementsprechend sind sowohl die zu verwendenden Maschinen als auch die Heißkanalverteiler relativ groß und komplex. Die Heißkanalverteiler sind üblicherweise mit einem Nadelverschlusssystem oder dergleichen ausgestattet, damit am Ende eines Prozesstaktes die einzelnen Kanäle des Heißkanalverteilers geschlossen werden können. Somit kann kein geschmolzener Kunststoff aus ihnen heraustreten, wenn die nun mit geschmolzenem Kunststoff gefüllten Kavitäten vom Heißkanalverteiler zum Abkühlen der Kunststoffvorformlinge weggeführt und neue leere Kavitäten zum Befüllen mit geschmolzenem Kunststoff am Heißkanalverteiler positioniert werden. Eine derartige Vorrichtung und ein derartiges Verfahren ist beispielsweise aus der DE 2 154 441 A1 bekannt. Problematisch bei dabei ist allerdings, dass der geschmolzene Kunststoff nicht kontinuierlich gefördert werden kann, was zu einem ineffizienten Herstellungsprozess insbesondere hinsichtlich der energetischen Bilanz führt, da der geschmolzenen Kunststoff bis zum Einbringen in die entsprechende Kavität entsprechend temperiert werden muss, damit er seine Fließeigenschaften zum Einbringen in die Kavität beibehält.

Zum anderen ist aus der US 4,828,778 A zwar eine Vorrichtung bekannt, mit welcher der geschmolzene Kunststoff kontinuierlich gefördert werden kann. Allerdings ist es damit nicht möglich, die heutigen Standards hinsichtlich Hygiene und Reinheit einzuhalten, da die dortige Extruderdüse einen Abstand zu dem dortigen, die Kavitäten für die Kunststoffvorformlinge beinhaltenden Trägerelement aufweist, welches die Kavitäten an der Extruderdüse zum Befüllen mit geschmolzenem Kunststoff vorbeiführt. Die Verwendung einer solchen Vorrichtung beziehungsweise eines solchen Verfahrens in der Produktion von Kunststoffvorformlingen für die Lebensmittel- beziehungsweise Pharmaindustrie ist bedenklich, da der Kunststoff über den Abstand zwischen Extruderdüse und den Kavitäten kontaminiert werden kann, wenn die Extrusion nicht in hochreinen oder sterilen Räumen durchgeführt wird.

Des Weiteren ist in der WO 2006/045720 A1 ein als Exjection bekanntes Verfahren und eine entsprechende Vorrichtung offenbart. Bei sehr langen Teilen und sehr hohen Fließwegverhältnissen (Quotient aus Fließweg und Wanddicke) tritt im Spritzguss das Problem auf, dass die Kunststoffschmelze einfriert (also der freie Querschnitt vom Rand her zufriert) und das zu formende Kunststoffteil nicht ausgeformt werden kann. Klassisch wird dieses Problem dadurch gelöst, dass ein so genannter Kaskadenspritzguss verwendet wird. Entlang des Fließweges gibt es dabei mehrere Anspritzpunkte, die der Reihe nach genutzt werden. Dadurch wird der Herstellungsprozess des langen Teiles in kürzere Teilbereiche unterteilt.

Das Exjectionverfahren macht aus diesem getakteten Verfahren ein kontinuierliches Verfahren. Ein kontinuierlicher Schmelzekanal, der an dem Punkt der Schmelzezuführung vorbeigefahren wird, ersetzt die größere Zahl der Anspritzpunkte beim Kaskadenspritzguss. Dieses Verfahren kann auch für die Herstellung von Teilen eingesetzt werden, die fast wie extrudierbare Profile aufgebaut sind, aber Unterbrechungen aufweisen (z.B. Kabelkanäle). Allerdings ist man mit dem in der WO 2006/045720 A1 offenbarten Verfahren und der dortigen Vorrichtung nicht in der Lage Kunststoffvorformlinge herzustellen.

Es ist daher Aufgabe der Erfindung eine Vorrichtung und ein Verfahren zur Herstellung von Kunststoffvorformlingen aus einem thermoplastischen Kunststoff bereitzustellen, bei dem der geschmolzene Kunststoff kontinuierlich in die Kavitäten zur Bildung der Kunststoffvorformlinge gefördert werden kann, wobei gleichzeitig eine Kontaminierung des geschmolzenen Kunststoffes ausgeschlossen ist.

Gelöst wird diese Aufgabe durch eine Vorrichtung mit den Merkmalen des Patentanspruchs 1 und durch ein Verfahren mit den Merkmalen des Patentanspruchs 12. Vorteilhafte Ausgestaltungen der Erfindung finden sich in den Unteransprüchen.

Die erfindungsgemäße Vorrichtung zum Herstellen von Kunststoffvorformlingen aus einem thermoplastischen Kunststoff weist eine Einrichtung zum Bereitstellen von fließfähigem thermoplastischem Kunststoff, ein dieser Einrichtung nachgeschaltetes Heißkanalwerkzeug und eine mehrere Kavitäten aufweisende Transporteinrichtung auf. Gekennzeichnet ist die erfindungsgemäße Vorrichtung dadurch, dass das Heißkanalwerkzeug wenigstens einen Heißkanal aufweist, der in eine Fläche des Heißkanalwerkzeugs eingebracht ist, und dass die Transporteinrichtung eine Fläche aufweist, in welcher Öffnungen zum Befüllen der Kavitäten eingebracht sind. Diese Flächen des Heißkanalwerkzeugs und der Transporteinrichtung sind derart gegeneinander ausrichtbar, dass sie aneinander gleiten, wobei immer wenigstens eine Öffnung einer Kavität über dem Heißkanal positioniert ist. Diese Formulierung soll allerdings nicht nur so verstanden werden, dass die Öffnung der wenigstens einer Kavität räumlich über dem Heißkanal positioniert ist, vielmehr kann die wenigstens eine Öffnung einer Kavität auch räumlich unterhalb oder auch seitlich zu dem Heißkanal positioniert sein.

Durch diese erfindungsgemäße Ausgestaltung ist es möglich, kontinuierlich geschmolzenen, fließfähigen thermoplastischen Kunststoff unter Druck in den Heißkanal des Heißkanalwerkzeuges zu fördern, da immer wenigstens eine Kavität mit Ihrer Öffnung über dem Heißkanal positioniert ist und somit geschmolzenen thermoplastischen Kunststoff aufnehmen kann. Dabei sind die Geschwindigkeit, mit welcher die Transporteinrichtung über den Heißkanal hinweg bewegt wird und der Druck, mit dem der geschmolzenen thermoplastische Kunststoff in den Heißkanal gefördert wird, bevorzugt derart aufeinander abgestimmt, dass es zu keinem Zeitpunkt während des Betriebes zu einem Kunststoffrückstau innerhalb des Heißkanals beziehungsweise des Heißkanalwerkzeuges kommt.

Zu jedem Zeitpunkt wird zumindest eine Kavität mit geschmolzenem thermoplastischem Kunststoff gefüllt. Hierdurch ist gewährleistet, dass die Vorrichtung besonders effizient, insbesondere hinsichtlich energetischer Gesichtspunkten betrieben werden kann. Durch die kontinuierliche Förderung des geschmolzenen Kunststoffes ist es nicht notwendig, thermische Energie aufzuwenden, um ein Erstarren des innerhalb des Heißkanal beziehungsweise des Heißkanalwerkzeuges gestauten Kunststoffs zu vermeiden.

Weiterhin ist durch die spezielle Ausrichtung der den Heißkanal aufweisende Fläche des Heißkanalwerkzeuges und der die Öffnungen der Kavitäten aufweisenden Fläche der Transporteinrichtung sichergestellt, dass der geschmolzene thermoplastische Kunststoff von äußeren Einflüssen hermetisch abgeschirmt und somit eine Kontaminierung vermieden ist. Dies ist insbesondere vor dem Hintergrund wichtig, dass die Kunststoffvorformlinge überwiegend in der Lebensmittel- und Pharmaindustrie zu entsprechenden Flaschen oder dergleichen Behältnisse weiterverarbeitet werden, die Lebensmittel oder Pharmazeutika aufnehmen. Es versteht sich von selbst, dass eine Kontaminierung von derartigen Kunststoffvorformlingen in diesen Industriezwiegen nicht hinnehmbar ist und auch über entsprechende Standardisierungen ausgeschlossen ist.

Ein weiterer Vorteil der erfindungsgemäßen Vorrichtung gegenüber dem Stand der Technik ist auch, dass durch die sehr gezielte Temperierung des sehr geringe Baugröße aufweisenden Heißkanalwerkzeuges und dessen in Verbindung mit der Transporteinrichtung geschlossene Bauweise sowie durch die kontinuierliche Förderung geringe Verweildauer des geschmolzenen thermoplastischen Kunststoffes innerhalb des Heißkanals die Materialdegradation beziehungsweise die Scherung der Kunststoffschmelze minimiert wird. Dies führt zu sehr homogenen Ergebnissen innerhalb der Struktur der produzierten Kunststoffvorformlinge, wodurch auch diesbezüglich hohe Qualitätsstandards eingehalten werden.

Nach einer ersten vorteilhaften Ausgestaltung der Erfindung weist das Heißkanalwerkzeug Verstellelemente auf, mittels welcher der Querschnitt des Heißkanals über seine Längserstreckung variierbar ist. Durch die Änderung des Querschnittes des Heißkanals über seine Längserstreckung lassen sich in einfacher Weise in dem geschmolzenen thermoplastischen Kunststoffes innerhalb des Heißkanals Temperatur- und Druckgradienten erzeugen, mittels welcher die Befüllung der Kavitäten derart optimiert werden kann, dass die produzierten Kunststoffvorformlinge eine besonders homogene Struktur und somit eine sehr hohe und gleichmäßige Qualität aufweisen.

Der Druck in dem (insbesondere stehenden) Heißkanal kann damit über den Querschnitt des Kanals eingestellt werden, insbesondere derart, dass es zu einem Druckabfall in Strömungsrichtung kommt. Neben den verstellbaren Bodenelementen und/oder Seitenelementen sind hierzu auch Einbauten zur Druckreduzierung im Verlauf des Schmelzekanals möglich, die bevorzugt ein- und ausgefahren werden können. Durch verstellbare Einbauten an dem Formrad könnte sogar der Druck erhöht werden (wegen einer "Schleppwirkung" des über dem Heißkanal wegdrehenden Formrades.

Realisiert werden können solche Variierungen im Querschnitt des Heißkanals dadurch, dass die Verstellelemente als verstellbare Seiten- und/oder Bodenelemente des Heißkanals ausgebildet sind.

Alternativ oder auch zusätzlich können dem Heißkanalwerkzeug und/oder der Transporteinrichtung Einrichtungen zur Druckreduzierung und/oder Druckerhöhung über die Längserstreckung des Heißkanals zugeordnet sein. Hierdurch ist es möglich den Einspritzdruck innerhalb des Heißkanals besonders genau zu regulieren.

Nach einer anderen vorteilhaften Ausgestaltung der Erfindung ist die Einrichtung zum Bereitstellen von fließfähigem thermoplastischem Kunststoff als Extruder ausgebildet. In der Praxis sind solche Extruder bereits sehr gut und in allen möglichen technischen Bereichen erprobt, so dass damit sehr zuverlässig aus Kunststoffgranulat der geschmolzene thermoplastische Kunststoff hergestellt werden kann. Der Extruder steht dabei in Wirkverbindung mit dem nachgeschalteten Heißkanalwerkzeug, so dass der thermoplastische Kunststoff im Heißkanal im geschmolzenen Zustand und fließfähig vorliegt und von dort über den durch den vom Extruder erzeugten Druck in die Kavitäten befördert wird, in welchen die Kunststoffvorformlinge ihre endgültige Form erhalten.

Beim Weiterbefördern der Transporteinrichtung erstarrt der geschmolzene thermoplastische Kunststoff unter Bildung der Kunststoffvorformlinge innerhalb der Kavität. Die so erhaltenen Kunststoffvorformlinge können innerhalb der Vorrichtung zu den endgültigen Flaschen beziehungsweise Behältnissen weiterverarbeitet werden. Es besteht aber auch die Möglichkeit die Vorrichtung als "Stand Alone"-Anlage zur Herstellung der Kunststoffvorformlinge zu betreiben, die dann an einem anderen Ort in einer anderen Anlage zu den eigentlichen Flaschen beziehungsweise Behältnissen weiterverarbeitet werden.

Nach einem anderen Gedanken der Erfindung sind sowohl die den Heißkanal aufweisende Fläche des Heißkanalwerkzeuges als auch die die Öffnungen der Kavitäten aufweisende Fläche der Transporteinrichtung eben ausgebildet. Diese beiden Flächen können somit in einfacher Weise aneinander abgleiten, so dass eine besonders einfache hermetische Abriegelung des geschmolzenen thermoplastischen Kunststoffes innerhalb des Heißkanals erreicht ist. Weiterhin sind solche ebene Flächen herstellungstechnisch viel einfacher zu realisieren und während des Betriebes der erfindungsgemäßen Vorrichtung viel einfacher zu handhaben als aneinander angepasste gekrümmte Flächen. Bevorzugt ist der Heißkanal stationär angeordnet und die Kavitäten lassen sich relativ gegenüber dem Heißkanal bewegen, insbesondere entlang einer kreisförmigen Bahn. Vorteilhaft ist damit ein drehbarer Träger vorgesehen, an dem die Kavitäten angeordnet sind.

Nach einem weiteren Gedanken der Erfindung ist die Transporteinrichtung als Formrad ausgebildet, wobei die Öffnungen der Kavitäten in einem Radius r auf der ebenen Fläche angeordnet sind. Diese Ausgestaltung der Erfindung bietet den Vorteil, die Kunststoffvorformlinge in einer Transporteinrichtung mit Rundlaufprozess herzustellen. Solche Rundläufer können sehr Platz sparend bauen, wobei vorliegend das Heißkanalwerkzeug nur punktuell an der Transporteinrichtung angreift und deshalb im Gegensatz zu herkömmlichen Vorrichtungen, welche im Rundlaufprozess betrieben werden, auf energieintensive Heißkanalverteilersysteme über die gesamte Transporteinrichtung verzichtet werden kann.

An eine als solches Formrad ausgebildete Transporteinrichtung ist der Heißkanal in einer Ausgestaltung der Erfindung natürlich angepasst. Der Heißkanal ist dabei ringsegmentförmig ausgebildet, wobei er einen Innenradius kleiner als der Radius r und einen Außenradius größer als der Radius r aufweist. Hierdurch ist gewährleistet, dass die Öffnungen der Kavitäten bei der Rotation des Formenrads immer über den den geschmolzenen thermoplastischen Kunststoff beinhaltenden Heißkanal geführt und somit die Kavitäten mit dem geschmolzenen thermoplastischen Kunststoff gefüllt werden können.

Nach einer anderen Ausgestaltung der Erfindung weist die Transporteinrichtung wenigstens ein lineares Trägerelement auf, wobei die Öffnungen der Kavitäten beabstandet, vorzugsweise äquidistant beabstandet, auf der ebenen Fläche angeordnet sind. Durch diese Ausgestaltung ist ein Anbringen der Kavitäten in linearer Reihenfolge möglich. Dabei werden die Kavitäten beispielsweise zu viert auf parallelen Trägerelementen, beispielsweise auf drei parallelen Trägerelementen angebracht die jeweils mit einem eigenen Heißkanal korrespondieren. Diese mehreren Heißkanäle können dabei von einem einzelnen Extruder versorgt werden, der die Heißkanäle nacheinander beschickt. Allerdings ist es auch denkbar, für jeden Heißkanal einen eigenen Extruder vorzusehen. Die Trägerelemente, auf denen die formgebenden Kavitäten sitzen, würden über der Düse des jeweiligen Heißkanals verfahren. So können in einem " Trägerelementzyklus" mit einem Trägerelement mit vier Kavitäten beispielsweise vier Kunststoffvorformlinge und in einem "Maschinenzyklus" mit drei Trägerelementen ä vier Kavitäten dann beispielsweise entsprechend 12 Kunststoffvorformlinge hergestellt werden.

Grundsätzlich soll bei der Herstellung der Kunststoffvorformlinge so wenig Material wie nötig verarbeitet und verbraucht werden, so dass man den geschmolzenen Kunststoff eigentlich nur für die Kunststoffvorformlinge verwenden und keinen Ausschuss produzieren will. Es kann sich allerdings aus Handhabungsgründen anbieten, die Kunststoffvorformlinge mittels einer Kunststoffschnur, eines Kunststoffbandes oder dergleichen miteinander zu verbinden und dann beispielsweise aufzurollen. Zur Weiterverarbeitung der Kunststoffvorformlinge würden solche Kunststoffschnüre, Kunststoffbänder oder dergleichen einfach von den Kunststoffvorformlingen abgetrennt. Die abgetrennten Reste können wieder zu Granulat verarbeitet und erneut einem Produktionsprozess zugeführt werden. Um dies zu realisieren bietet es sich an, dass die Fläche der Transporteinrichtung Kanäle aufweist, welche Öffnungen benachbarter Kavitäten miteinander verbindet. Diese Kanäle werden nun beim Bewegen der Öffnungen der Kavitäten über den den geschmolzenen thermoplastischen Kunststoff aufweisenden Heißkanal ebenfalls mit dem geschmolzenen thermoplastischen Kunststoff gefüllt, der beim Weiterbewegen der Transportvorrichtung ebenfalls erstarrt und somit in benachbarten Kavitäten hergestellte Kunststoffvorformlinge miteinander verbindet.

Obwohl ein Grundgedanke der Erfindung in einer möglichst energieeffizienten Herstellung der Kunststoffvorformlinge liegt und daher nur ein Heißkanal vorgesehen ist, kann es sich anbieten, mehrere Heißkanäle vorzusehen. Insbesondere ist diese Ausgestaltung der Erfindung dann sinnvoll, wenn Kunststoffvorformlinge im Multilayerverfahren für bestimmte Anwendungen herzustellen sind. Obwohl durch die mehreren Heißkanäle der Energieaufwand deutlich ansteigt, ist die Energiebilanz doch erheblich besser als bei den Multilayerverfahren aus dem Stand der Technik, da sich dort die Energiebilanz mit jedem zusätzlichen Layer gegenüber der Erfindung verschlechtert.

Das Formen der Kunststoffvorformlinge könnte sowohl im klassischen Injection Moulding als auch im Injection Compression Moulding stattfinden. Denkbar ist das Verfahren auch als Multilayerverfahren mit mehreren Schmelzekanälen oder mit einer coextrudierten Schmelze in dem Heißkanal. Vorteilhaft erstreckt sich der Heißkanal in einer Umfangsrichtung bzw. entlang wenigstens einer kreisförmigen Linie.

Das erfindungsgemäße Verfahren zum Herstellen von Kunststoffvorformlingen aus einem thermoplastischen Kunststoff, beinhaltet folgende Schritte
a) Schmelzen von thermoplastisches Kunststoffgranulat,
b) kontinuierliches Einbringen des geschmolzenen thermoplastischen Kunststoffs mit Druck in einen Heißkanal eines Heißkanalwerkzeuges,
c) (insbesondere kontinuierliches) Bewegen einer mehrere Kavitäten aufweisende Transporteinrichtung mit einer Fläche, welche Öffnungen der Kavitäten aufweist, über eine Fläche des Heißkanalwerkzeuges, wobei immer wenigstens eine Öffnung einer Kavität über dem Heißkanal positioniert ist.

Dadurch dass sich die Transporteinrichtung kontinuierlich bewegt und kontinuierlich geschmolzener thermoplastischer Kunststoff unter Druck in den Heißkanal eingebracht wird, werden auch kontinuierlich die Kavitäten mit dem geschmolzenen thermoplastischen Kunststoff gefüllt, der beim Weiterbewegen der Transporteinrichtung erstarrt, wodurch die Kunststoffvorformlinge ihre endgültige Form erhalten.

Nach einer ersten Ausgestaltung des erfindungsgemäßen Verfahrens wird die Temperatur des geschmolzenen thermoplastischen Kunststoffs über die Längserstreckung des Heißkanals variiert. Wie bereits bei der Beschreibung der erfindungsgemäßen Vorrichtung kann hierdurch eine besonders homogene Struktur der produzierten Kunststoffvorformlinge und somit eine besonders gute Qualität derselben erreicht werden.

In die gleiche Richtung zielt die Ausgestaltung des erfindungsgemäßen Verfahrens, wonach der Druck, mit dem der geschmolzene thermoplastische Kunststoff durch den Heißkanal geführt wird, über die Längserstreckung des Heißkanals variiert wird. Auch hierauf wurde bereits in der Beschreibung der erfindungsgemäßen Vorrichtung eingegangen.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1:: eine schematische Darstellung eines Ausführungsbeispiels einer erfindungsgemäßen Vorrichtung,
- Figur 2:: ein Ausführungsbeispiel einer erfindungsgemäßen Vorrichtung in einer Detailansicht in einer Querschnittdarstellung und
- Figur 3:: ein Ausführungsbeispiel einer erfindungsgemäßen Vorrichtung mit einer Transportvorrichtung mit drei linearen Trägerelementen in einer schematischen Darstellung.

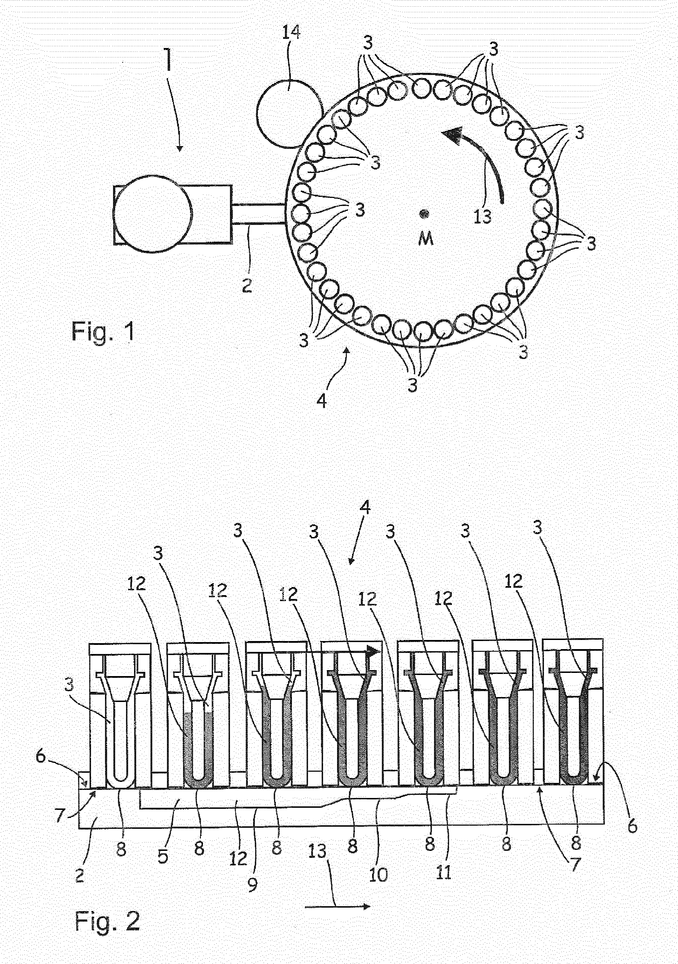

In der Figur 1 ist eine schematische Darstellung eines Ausführungsbeispiels einer erfindungsgemäßen Vorrichtung zum Herstellen von Kunststoffvorformlingen aus einem thermoplastischen Kunststoff 12 gezeigt. Sie besteht im Wesentlichen aus einer Einrichtung 1 zum Bereitstellen von fließfähigem thermoplastischem Kunststoff 12 (vgl. Fig. 2), an die sich ein Heißkanalwerkzeug 2 anschließt, einer Transportvorrichtung 4 für Kavitäten 3 und einer Entnahmeeinrichtung 14.

Im vorliegenden Ausführungsbeispiel ist die Einrichtung 1 als Extruder ausgebildet. Diesem Extruder wird ein Granulat eines thermoplastischen Kunststoffes zugeführt, der in dem Extruder geschmolzen und unter Druck in das Heißkanalwerkzeug 2 gepresst wird. Das Heißkanalwerkzeug 2 weist vorliegend eine Heißkanal 5 auf, in den der geschmolzene thermoplastische Kunststoff 12 gepresst wird und von wo dieser über Öffnungen 8 in die Kavitäten 3 gelangt. Wie dieser Vorgang in der erfindungsgemäßen Vorrichtung genau abläuft wird weiter unter in der Beschreibung der Figur 2 näher erläutert.

Dieses Verfahren ist damit durch einen kontinuierlich laufenden Extruder ausgebildet. Ein ringsegmentsförmiger Schmelzkanal bzw. Heißkanal deckt im Gegensatz zu einem konventionellen Heißkanalverteiler nur einen Teil des Kreises ab. Dadurch wird das heiß zu haltende Bauteil wesentlich kleiner. Ggfs. ist nur noch eine Schmelzeleitung bzw. ein Heißkanal notwendig, die Verweilzeit und Scherung der Schmelze (Materialdegradation !) wird bevorzugt ebenfalls geringer.

Es können während des Einpressen des Kunststoffes 12 in den Heißkanal 5 nur die Kavitäten 3 mit dem geschmolzenen thermoplastischen Kunststoff 12 gefüllt werden, die über ihre Öffnungen 8 in Wirkverbindung mit dem Heißkanal 5 stehen. Die Transporteinrichtung 4, welche vorliegend als Formrad ausgebildet ist und deren Kavitäten 3 mit ihren Öffnungen in einem Radius r vom Mittelpunkt M beabstandet sind, dreht sich dabei in Pfeilrichtung 13 um ihren Mittelpunkt M. Nachdem die Kavitäten 3 mit dem geschmolzenen thermoplastischen Kunststoff 12 befüllt wurden, vollziehen sie annähernd eine ganze Umdrehung innerhalb der als Formrad ausgebildeten Transporteinrichtung 4. Während dieser Zeit kühlt der thermoplastische Kunststoff 12 innerhalb der Kavitäten 3 ab und erstarrt dabei, so dass die fertigen Kunststoffvorformlinge abschließend an der Entnahmeeinrichtung 14 aus der Transporteinrichtung 4 entnommen werden können. Anschließend können die Kunststoffvorformlinge in bekannter Weise einer Streckblasmaschine zugeführt werden, die die Vorformlinge in Kunststoffbehälter umformt.

Der eigentliche erfindungserhebliche Bereich der erfindungsgemäßen Vorrichtung ist jedoch in der Detaildarstellung der Figur 2 gezeigt. Diese Querschnittdarstellung zeigt das Ausführungsbeispiel der Figur 1 im Bereich der Befüllung der Kavitäten 3 mit geschmolzenem thermoplastischem Kunststoff 12. Anhand der Form der Kavitäten 3 lässt sich erkennen, dass mit der hier gezeigten Vorrichtung aus PET-Granulat PET-Vorformlinge für PET-Flaschen hergestellt werden.

Dabei ist auch deutlich zuerkennen, dass in das Heißkanalwerkzeug 2 ein Heißkanal 5 eingearbeitet ist, welcher in dieser Darstellung bereits mit geschmolzenem thermoplastischem Kunststoff gefüllt ist. Mit Ausnahme des Heißkanals 5 weist das Heißkanalwerkzeug 2 auf seiner der Transporteinrichtung 4 zugewandten Seite eine ebene Fläche 6 auf. An diese Fläche 6 ist eine dem Heißkanalwerkzeug 2 zugewandte Fläche 7 der Transporteinrichtung 4 angepasst. Die Flächen 6 und 7 des Heißkanalwerkzeugs 2 beziehungsweise der Transporteinrichtung 4 schließen dabei den Heißkanal 5 hermetisch von seiner Umgebung ab, so dass keine Kontaminierung des geschmolzenen thermoplastischen Kunststoffes 12 im Heißkanal 5 erfolgen kann. Sofern auch der Extruder und das Ausgangsgranulat nicht kontaminiert sind, ist somit sichergestellt, dass keine Kontaminierung der herzustellenden Kunststoffvorformlinge auftritt.

Ferner ist durch die hermetische Abriegelung des Heißkanals 5 aufgrund der aneinander liegenden Flächen 6 und 7 auch die Energieeffizienz optimiert, da keine Energie in Form von Hitze direkt aus dem Heißkanal 5 an die Umgebung abgegeben werden kann. Lediglich über das Heißkanalwerkzeug 2 oder die Transporteinrichtung 4 kann die in den Heißkanal 5 in Form von Hitze eingebrachte Energie abgeleitet werden. Sofern diese beiden Elemente eine entsprechende schlechte Wärmeleitfähigkeit von dem Heißkanal 5 weg aufweisen, wird daher die Vorrichtung entsprechend energieeffizient betrieben.

Die Bodenelemente de Heißkanals 5 sind vorliegend als Verstellelemente 9, 10 und 11 ausgebildet, mit welchen der Querschnitt des Heißkanals 5 variabel eingestellt werden kann. Im vorliegenden Fall verringert sich der Querschnitt des Heißkanals 5 in Richtung 13, was der Bewegungsrichtung der Transporteinrichtung entspricht. Diese Querschnittsverringerung wird dadurch erreicht, dass die Verstellelemente 9, 10 und 11 in Bewegungsrichtung 13 der Transporteinrichtung immer mehr angehoben sind. Das Verstellelement 10 ist gegenüber dem Verstellelement 9 uns das Verstellelement 11 ist gegenüber dem Verstellelement 10 angehoben. Dies hat zur Folge, dass der Druck in Strömungsrichtung des geschmolzenen Kunststoffs 12 innerhalb des Heißkanals abnimmt.

In der Darstellung der Figur 2 ist weiterhin deutlich zu erkennen, dass die zweite und dritte Kavität 3 von links gerade mit flüssigem thermoplastischem Kunststoff 12 gefüllt werden, während die 4 rechts davon angeordneten Kavitäten 3 bereits gefüllt sind. Obwohl die vierte und fünfte Kavität 3 von links bereits vollständig gefüllt sind, befinden sie sich mit Ihrem Öffnungen 8 noch über dem Heißkanal 5, so dass der darin befindliche geschmolzene thermoplastische Kunststoff 12 noch einen Gegendruck auf den bereist erstarrenden Kunststoff in der vierten und fünften Kavität 3 von links ausübt.

Ein im Stand der Technik vorgesehener großer Heißkanalstern beim Spritzgießen (Injection Moulding) oder Spritzpressen (Injection Compression Moulding) wird damit im Rahmen der vorliegenden Erfindung ersetzt durch einen Schmelzekanal, zu dem sich die Kavitäten relativ bewegen. Dieser Heißkanal deckt bevorzugt nur denjenigen Bereich des Rades ab, bei dem wirklich eingespritzt wird, nicht aber den Teil, bei dem ohnehin nur gekühlt oder entnommen wird. Das bedeutet, der Heißkanal 5 deckt bevorzugt nur einen Teilbereich bzw. Teilkreis des Rades bzw. der darin befindlichen Kavitäten 3 ab. Weiterhin können auch wenigstens zwei Heißkanäle 5 angeordnet sein, die bevorzugt jeweils unterschiedliche Teilbereiche der Transporteinrichtung 4 abdecken können.

Die beiden rechten ebenfalls bereits mit Kunststoff 12 gefüllten Kavitäten 3 sind aber bereits geschlossen, da deren Öffnungen 8 durch die Fläche 6 des Heißkanalswerkzeuges 2 abgedeckt sind. Sobald der Kunststoff 12 in den Kavitäten 3 derart erstarrt ist, dass er seine Fließfähigkeit verloren hat, müssen die Öffnung 8 nicht mehr geschlossen gehalten werden, da der Kunststoff nicht mehr aus der Kavität 3 herausließen kann. Dementsprechend ist das Heißkanalwerkzeug 2 derart dimensioniert, dass beim Weiterbewegen der Transporteinrichtung die Öffnungen 8 der Kavitäten freigegeben werden, Insofern ist dadurch auch eine Materialeinsparung gegeben, da das Heißkanalwerkzeug 2, auch wenn es in diesem Bereich nicht geheizt werden müsste, nicht um die ganze Transporteinrichtung 4 geführt werden muss. Das Heizkanalwerkzeug 2 ist daher bevorzugt stationär an der sich drehenden Transporteinrichtung 4 angeordnet.

Werden die Kavitäten 3 durch die Transporteinrichtung 4 weiterbewegt, wird nun die ganz linke Kavität 3 mit ihren Öffnung 8 über den Heißkanal bewegt, so dass auch nun deren Befüllen mit geschmolzenem thermoplastischem Kunststoff 12 beginnen kann. Dabei werden nun auch die in der Figur 2 noch nicht gänzlich gefüllten Kavitäten 3 vollständig gefüllt und in Richtung 13 zur Entnahmeeinrichtung 14 bewegt. Speziell die Figur 2 veranschaulicht sehr deutlich die kontinuierliche Arbeitsweise der Vorrichtung und des Verfahrens, ohne dass geschmolzener thermoplastischer Kunststoff 12 aufgrund einer Prozesstaktung ohne Bewegung im Heißkanal 5 beziehungsweise Heißkanalwerkzeug 2 verweilt.

Der erfindungsgemäßen Vorrichtung könnte eine weitere Maschine nachgeschaltet sein, welche die so entstehenden Kunststoffvorformlinge direkt in Kunststoffbehältnisse umformt, wie etwa eine Blasformmaschine, insbesondere eine Streckblasmaschine. Dabei wäre es möglich, dass eine derartige Blasformmaschine eine Heizeinrichtung wie einen Durchgangsofen aufweist, in dem die Kunststoffvorformlinge erwärmt werden bzw. auf Umformtemperatur gebracht werden. Es wäre jedoch auch denkbar, dass sich diese Blasformmaschine unmittelbar an die erfindungsgemäße Vorrichtung anschließt, da diese bereits noch warme Kunststoffvorformlinge ausgibt. Auch wäre es denkbar, dass zwar eine Erwärmungseinrichtung vorgesehen ist, diese jedoch die Kunststoffvorformlinge nicht so stark erwärmen muss wie im Stand der Technik, da diese bereits erwärmt aus der erfindungsgemäßen Vorrichtung ausgegeben werden.

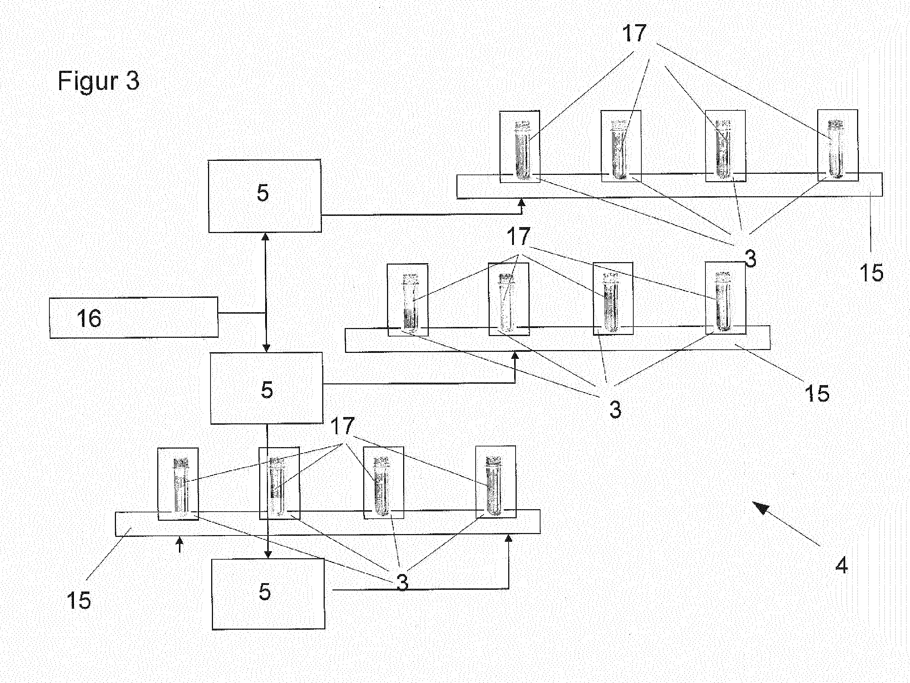

Figur 3 zeigt beispielhaft drei lineare Trägerelemente 15 einer hier nicht näher dargestellten Transporteinrichtung 4. Anstatt der Anordnung auf einem Karussell wie in der Figur 1 dargestellt, werden hierbei die Kavitäten 3 in linearer Reihenfolge angeordnet. Im vorliegenden Beispiel der Figur 3 sind jeweils vier Kavitäten 3 auf drei parallelen Trägerelementen 15 angeordnet, die jeweils von einem eigenen hier nicht dargestellten Heißkanal 5 versorgt werden. Diese Heißkanäle 5 werden wiederum von einem einzelnen Extruder 16 versorgt, der die Heißkanäle 5 reihum beschickt. Die Trägerelemente 15, auf denen die formgebenden Kavitäten 3 sitzen, werden über der Düse des jeweiligen Heißkanals verfahren, so dass in einem " Trägerelementzyklus" beispielsweise 4 Kunststoffvorformlinge 17 und in einem "Maschinenzyklus" dann beispielsweise entsprechend zwölf Kunststoffvorformlinge 17 herstellbar sind. Die Anzahl der Trägerelemente und Kavitäten kann beliebig gewählt werden.

Die Anmelderin behält sich vor, sämtliche der in den Anmeldungsunterlagen offenbarten Merkmale einzeln oder in Kombination als erfindungswesentlich zu beanspruchen, sofern diese einzeln oder in Kombination neu gegenüber dem Stand der Technik sind.

### Bezugszeichenliste

- 1: Einrichtung
- 2: Heißkanalwerkzeug
- 3: Kavität
- 4: Transporteinrichtung
- 5: Heißkanal
- 6: Fläche
- 7: Fläche
- 8: Öffnung
- 9: Verstellelement
- 10: Verstellelement
- 11: Verstellelement
- 12: Kunststoff
- 13: Richtung
- 14: Entnahmeeinrichtung
- 15: Trägerelemente
- 16: Extruder
- 17: Kunststoffvorformling
- r: Radius
- M: Mittelpunkt

## Patentansprüche

1. Vorrichtung zum Herstellen von Kunststoffvorformlingen aus einem thermoplastischen Kunststoff (12) mit
einer Einrichtung (1) zum Bereitstellen von fließfähigem thermoplastischem Kunststoff (12),
einem der Einrichtung (1) nachgeschalteten Heißkanalwerkzeug (2) und
einer mehrere Kavitäten (3) aufweisenden Transporteinrichtung (4)
**dadurch gekennzeichnet, dass**
das Heißkanalwerkzeug (2) wenigstens einen Heißkanal (5) aufweist, der in eine Fläche (6) des Heißkanalwerkzeugs (2) eingebracht ist, und die Transporteinrichtung (4) eine Fläche (7) aufweist, in welcher Öffnungen (8) zum Befüllen der Kavitäten (3) eingebracht sind, wobei die Flächen (6, 7) des Heißkanalwerkzeugs (2) und der Transporteinrichtung (4) derart gegeneinander ausrichtbar sind, dass sie aneinander gleiten, wobei immer wenigstens eine Öffnung (8) einer Kavität (3) über dem Heißkanal (5) positioniert ist.

2. Vorrichtung nach Anspruch 1,
**dadurch gekennzeichnet, dass**
das Heißkanalwerkzeug (2) Verstellelemente (9, 10, 11) aufweist, mittels welcher der Querschnitt des Heißkanals (5) über seine Längserstreckung variierbar ist.

3. Vorrichtung nach Anspruch 2,
**dadurch gekennzeichnet, dass**
die Verstellelemente (9, 10, 11) als verstellbare Seiten- und/oder Bodenelemente des Heißkanals (5) ausgebildet sind.

4. Vorrichtung nach einem der vorhergehenden Ansprüche,
**dadurch gekennzeichnet, dass**
dem Heißkanalwerkzeug (2) Einrichtungen zur Druckreduzierung über die Längserstreckung des Heißkanals zugeordnet sind.

5. Vorrichtung nach einem der vorhergehenden Ansprüche,
**dadurch gekennzeichnet, dass**
der Transporteinrichtung (4) Einrichtungen zur Druckerhöhung über die Längserstreckung des Heißkanals zugeordnet sind.

6. Vorrichtung nach einem der vorhergehenden Ansprüche,
**dadurch gekennzeichnet, dass**
die Einrichtung (1) als Extruder ausgebildet ist.

7. Vorrichtung nach einem der vorhergehenden Ansprüche,
**dadurch gekennzeichnet, dass**
die Flächen (6, 7) eben ausgebildet sind.

8. Vorrichtung nach Anspruch 7,
**dadurch gekennzeichnet, dass**
die Transporteinrichtung (4) als Formrad ausgebildet ist, wobei die Öffnungen (8) der Kavitäten (3) in einem Radius (r) auf der ebenen Fläche (7) angeordnet sind.

9. Vorrichtung nach Anspruch 8,
**dadurch gekennzeichnet, dass**
der Heißkanal (5) ringsegmentförmig ausgebildet ist, der einen Innenradius kleiner als der Radius (r) und einen Außenradius größer als der Radius (r) aufweist.

10. Vorrichtung nach Anspruch 7,
**dadurch gekennzeichnet, dass**
die Transporteinrichtung (4) wenigstens ein lineares Trägerelement (15) aufweist, wobei die Öffnungen (8) der Kavitäten (3) beabstandet, vorzugsweise äquidistant beabstandet, auf der ebenen Fläche (7) angeordnet sind.

11. Vorrichtung nach einem der vorhergehenden Ansprüche,
**dadurch gekennzeichnet, dass**
mehrere Heißkanäle (5) vorgesehen sind.

12. Vorrichtung nach einem der vorhergehenden Ansprüche,
**dadurch gekennzeichnet, dass**
die Fläche (7) der Transporteinrichtung Kanäle aufweist, welche Öffnungen (8) benachbarter Kavitäten (3) miteinander verbinden.

13. Verfahren zum Herstellen von Kunststoffvorformlingen aus einem thermoplastischen Kunststoff (12), wobei
a) thermoplastisches Kunststoffgranulat geschmolzen wird,
b) der geschmolzene thermoplastische Kunststoff (12) kontinuierlich mit Druck in einen Heißkanal (5) eines Heißkanalwerkzeuges (2) eingebracht wird,
c) eine mehrere Kavitäten (3) aufweisende Transporteinrichtung (4) mit einer Fläche (7), welche Öffnungen (8) der Kavitäten (3) aufweist, über eine Fläche (6) des Heißkanalwerkzeuges (2) geführt wird, wobei immer wenigstens eine Öffnung (8) einer Kavität (3) über dem Heißkanal (5) positioniert ist.

14. Verfahren nach Anspruch 13,
**dadurch gekennzeichnet, dass**
die Temperatur des geschmolzenen thermoplastischen Kunststoffs (12) über die Längserstreckung des Heißkanals (5) variiert wird.

15. Verfahren nach Anspruch 13 oder 14,
**dadurch gekennzeichnet, dass**
der Druck, mit dem der geschmolzenen thermoplastischen Kunststoffs (12) durch den Heißkanal (5) geführt wird, über die Längserstreckung des Heißkanals variiert wird.
